# EUROPÄISCHE PATENTSCHRIFT

(11) **EP 3 296 578 B1**
(45) Veröffentlichungstag und Bekanntmachung des Hinweises auf die Patenterteilung: **08.04.2020**
(21) Anmeldenummer: 16189256.7
(22) Anmeldetag: 16.09.2016
(51) Int. Cl.: F16B 39/24, F16B 1/00

(54) **SICHERUNGSSCHEIBE FÜR ELEKTRISCH LEITENDE VERBINDUNGEN**
LOCK WASHER FOR ELECTRICALLY CONDUCTIVE CONNECTIONS
RONDELLE DE SÉCURITÉ POUR LIAISONS ÉLECTRO-CONDUCTRICES

(43) Veröffentlichungstag der Anmeldung: 21.03.2018
(73) Patentinhaber: Volborth, Thomas, 58553 Halver (DE)
(72) Erfinder: Volborth, Thomas, 58553 Halver (DE)
(74) Vertreter: Patentanwälte Dörner & Kötter PartG mbB

(56) Entgegenhaltungen:
- WO-A1-2005/003573
- DE-U1-202009 011 269
- US-A- 2 297 957
- US-A- 2 735 470
- US-A1- 2004 101 383

## Beschreibung

Die Erfindung betrifft eine Sicherungsscheibe für elektrisch leitende Verbindungen nach dem Oberbegriff des Patentanspruchs 1.

Im Bereich der Elektrotechnik werden Schraubenverbindungen zur Erzielung leitender Verbindungen unter anderem bei Starkstrom-Anwendungen eingesetzt. Hier werden Stromschienen bzw. Kontaktschienen miteinander oder auch Kabelschuhe mit Kontaktschienen verschraubt. Hierbei ist zwingend erforderlich, dass ein kontinuierlicher Kontaktdruck zwischen den verbundenen Teilen gewährleistet ist. Hierzu werden federnde Sicherungselemente eingesetzt, mit dem Ziel, Lockerungsvorgängen bei den Schraubverbindungen entgegenzuwirken. Derartige Lockerungsvorgänge resultieren aus Vorspannkraftverlusten in den Schraubverbindungen, welche als Folge von Setz- und / oder Kriechvorgängen bei den miteinander verschraubten Teilen auftreten. Ein Verlust von Vorspannkraftverlusten bilden an elektrisch leitenden Verbindungen eine große Gefahr, da hierdurch beispielsweise Lichtbögen entstehen können.

Verschraubungen in dem vorliegenden Bereich erfolgen regelmäßig auf weichen Gegenlagen wie Kupfer oder Aluminium. Da die maximale Flächenpressung nicht überschritten werden darf, werden die Schrauben mit einem begrenzten Drehmoment angezogen. Zur Vermeidung von Spanbildungen ist es bekannt, zwischen die eigentlichen Sicherungselemente und der Gegenlage, beispielsweise einer Kontaktschiene, plane Unterlegscheiben zu positionieren, an denen das Sicherungselement anliegt. Diese Unterlegscheiben dienen dem Schutz der Gegenlagen, da Spanbildung, Erhöhungen oder Vertiefungen in der Gegenlage ebenfalls Lichtbögen oder auch Erhöhungen von Übertragungswiderständen aufgrund von Luftspalten begründen können. In der US2004/0101383 A1 ist eine Erdungs-Unterlegscheibe beschrieben.

Aufgabe der vorliegenden Erfindung ist es, eine Sicherungsscheibe für elektrisch leitende Verbindungen, insbesondere zur Anordnung auf einer ebenen elektrischen Kontaktschiene bereitzustellen, die einfach herstellbar ist, gute Sicherungseigenschaften aufweist und bei der eine Beeinträchtigung der Scheibenunterlage im Zuge der Herstellung einer Schraubverbindung vermieden ist. Gemäß der Erfindung wird diese Aufgabe durch eine Sicherungsscheibe mit den Merkmalen des Patentanspruchs 1 gelöst.

Mit der Erfindung ist eine Sicherungsscheibe für elektrisch leitende Verbindungen zur Anordnung auf einer ebenen elektrischen Kontaktschiene bereitgestellt, die einfach herstellbar ist, gute Sicherungseigenschaften aufweist und bei der eine Beeinträchtigung der Scheibenunterlage im Zuge der Herstellung einer Schraubverbindung vermieden ist. Dadurch, dass die äußere Ringabschnittsfläche in eine ebene Gleitringfläche übergeht, die zur flächigen Anlage an der Kontaktschiene ausgebildet ist, ist ein Gleiten der Scheibenränder im Kontaktbereich beim Anpressen und Drehen der Sicherungsscheibe an die Kontaktschiene ermöglicht. Einer Beschädigung der Kontaktschienen-Oberfläche ist somit entgegengewirkt.

In Weiterbildung der Erfindung ist die Gleitringfläche mittels Prägen hergestellt. Hierdurch ist eine erhebliche Glättung der Gleitringfläche erzielt, die zudem zusätzlich verfestigt ist. Dadurch ist zum einen das Gleiten des Sicherungsscheibenrandes im Kontaktbereich mit der Kontaktschiene verbessert. Zum anderen ist durch die verfestigte Struktur der Gleitringfläche einem Materialabrieb im Kontaktbereich entgegengewirkt.

In weiterer Ausgestaltung der Erfindung ist der Übergang der Gleitringfläche zur äußeren Ringabschnittsfläche abgerundet ausgebildet. Dabei ist bevorzugt auch der Übergang der Gleitringfläche zur Außenmantelfläche des Scheibenkörpers abgerundet ausgebildet. Hierdurch ist die Gleitringfläche in Art einer Kufe gestaltet, wodurch einem Gleiten des Sicherungsscheibenrands im Kontaktbereich beim Anpressen der Sicherungsscheibe auf die Kontaktschiene unterstützt.

In Weiterbildung der Erfindung ist der Übergang zwischen der inneren Ringabschnittsfläche und der Innenmantelfläche des Scheibenkörpers abgerundet ausgebildet. Hierdurch ist ein Gleiten des inneren Sicherungsscheibenrandes beim Aufsetzen auf die Kontaktschiene ermöglicht.

In Ausgestaltung der Erfindung ist wenigstens einer der abgerundeten Übergänge durch Prägen hergestellt, wobei bevorzugt alle Übergänge durch Prägen hergestellt sind. Hierdurch sind die Gleiteigenschaften der Ränder der Sicherungsscheibe im Kontaktbereich mit der Kontaktschiene weiter verbessert.

In Weiterbildung der Erfindung schließt die äußere Ringabschnittsfläche mit der inneren Ringabschnittsfläche im unverspannten Zustand der Sicherungsscheibe einen Winkel von größer 165°, bevorzugt größer 170° ein. Diese Werte liefern gute Feder- und Sicherungseigenschaften der Scheibe bei gleichzeitiger vollständiger Anlage der Scheibenunterseite im angezogenen Zustand auf der Kontaktschiene, wodurch eine geringe Flächenpressung erzielt ist. Bevorzugt schließt die äußere Ringabschnittsfläche mit der Gleitringfläche einen Winkel von größer 170°, besonders bevorzugt größer gleich 173° ein.

In Ausgestaltung der Erfindung ist die innere Ringabschnittsfläche, bevorzugt auch die äußere Ringabschnittsfläche gewölbt ausgebildet. Durch die leicht bombierte, bogenförmige Geometrie der beiden Ringabschnittsflächen ist bereits bei geringen Vorspannkräften eine erhöhte Rückfederkraft erzielt. Setzerscheinungen und hieraus resultierende Vorspannkraftverluste sind hierdurch vermieden.

In weiterer Ausgestaltung der Erfindung weist die der Unterlage abgewandte Scheibenoberseite eine Profilierung auf. Hierdurch wird eine verbesserte Sicherungswirkung erzielt. Diese Profilierung kann sich auf dem inneren Bereich beschränken und beispielsweise in Form einer Riffelung ausgestaltet sein. Die Profilierung kann auch als Rändel- oder Kreuzrändel-Profilierung oder in anderer Weise ausgebildet sein. Gute Ergebnisse wurden bei Einbringung einer Profilierung als V- oder S-Profilierung erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

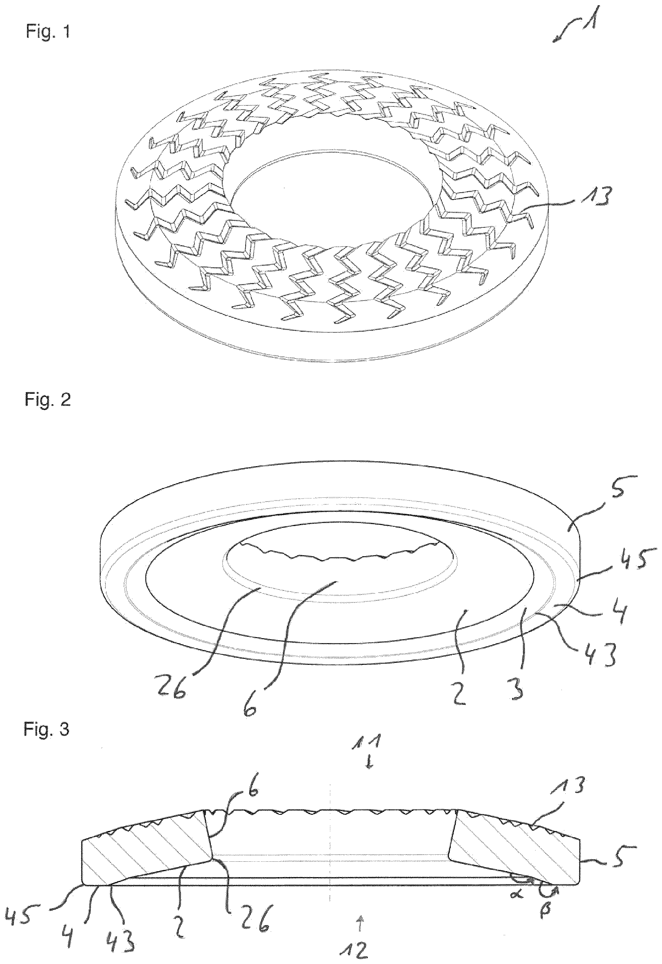

- Figur 1: die schematische Darstellung einer Sicherungsscheibe für elektrisch leitende Verbindungen;
- Figur 2: die Darstellung der Sicherungsscheibe aus Figur 1 in der Ansicht von unten;
- Figur 3: die Darstellung der Sicherungsscheibe aus Figur 1 im Querschnitt;
- Figur 4: die schematische Darstellung einer elektrisch leitenden Verbindung vor dem Anziehen der Schraube (nur eine zu verbindende Kontaktschiene gezeigt) und
- Figur 5: die Darstellung der Verbindungsanordnung aus Figur 4 mit angezogener Schraube.

Die als Ausführungsbeispiel gewählte Sicherungsscheibe ist aus C60-Federstahl hergestellt und umfasst einen im Wesentlichen ringförmig ausgebildeten Scheibenkörper 1, mit einer Scheibenoberseite 11 und einer Scheibenunterseite 12. Die Scheibenoberseite 11 ist mit einer Profilierung 13 versehen, die im Ausführungsbeispiel in Art einer S-Profilierung ausgeführt ist. Die der Kontaktschiene 7 entgegengerichtete Scheibenoberseite 11 der Sicherungsscheibe ist gewölbt ausgebildet.

Die Scheibenunterseite 12 ist in zwei Ringabschnittsflächen unterteilt, einer inneren Ringabschnittsfläche 2 und einer winklig zu dieser angestellten äußeren Ringabschnittsfläche 3. Im Ausführungsbeispiel sind die innere Ringabschnittsfläche 2 sowie auch die äußere Ringabschnittsfläche 3 jeweils nach innen gewölbt (konkav) ausgebildet.

Die äußere Ringabschnittsfläche 3 geht endseitig in eine ebene Gleitringfläche 4 über, die der flächigen Anlage an einer ebenen Kontaktschiene 7 dient. Die Gleitringfläche 4 ist zu den beiden Seiten abgerundet ausgebildet, sowohl an ihrem Übergang 43 zur äußeren Ringabschnittsfläche 3, als auch an ihrem Übergang 45 zur Außenmantelfläche 5 des Scheibenkörpers 1. Im Ausführungsbeispiel ist die Gleitringfläche 4 sowie die abgerundet ausgebildeten Übergänge 43, 45 mittels Prägen hergestellt.

Die Sicherungsscheibe ist derart gestaltet, das sie im unverspannten Zustand mit ihrer Gleitringfläche vier auf einer ebenen elektrischen Kontaktschiene 7 aufliegt. Dabei schließt die äußere Ringabschnittsfläche 3 mit der auf der Kontaktschienen 7 aufliegenden Gleitringfläche 4 einen Winkel β von 173° ein. Die innere Ringabschnittsfläche 2 ist winklig an die äußere Ringabschnittsfläche 3 angestellt, wobei die äußere Ringabschnittsfläche 3 mit der inneren Ringabschnittsfläche 2 einen Winkel α von 172° einschließt. An ihrer der äußeren Ringabschnittsfläche 2 abgewandten Seite grenzt die innere Ringabschnittsfläche 2 an die Innenmantelfläche 6 des Scheibenkörpers 1, wobei der Übergang 26 zwischen der inneren Ringabschnittsfläche 2 und der Innenmantelfläche 6 des Scheibenkörpers 1 abgerundet ausgebildet ist. Auch dieser abgerundet ausgebildete Übergang 26 ist im Ausführungsbeispiel durch Prägen hergestellt.

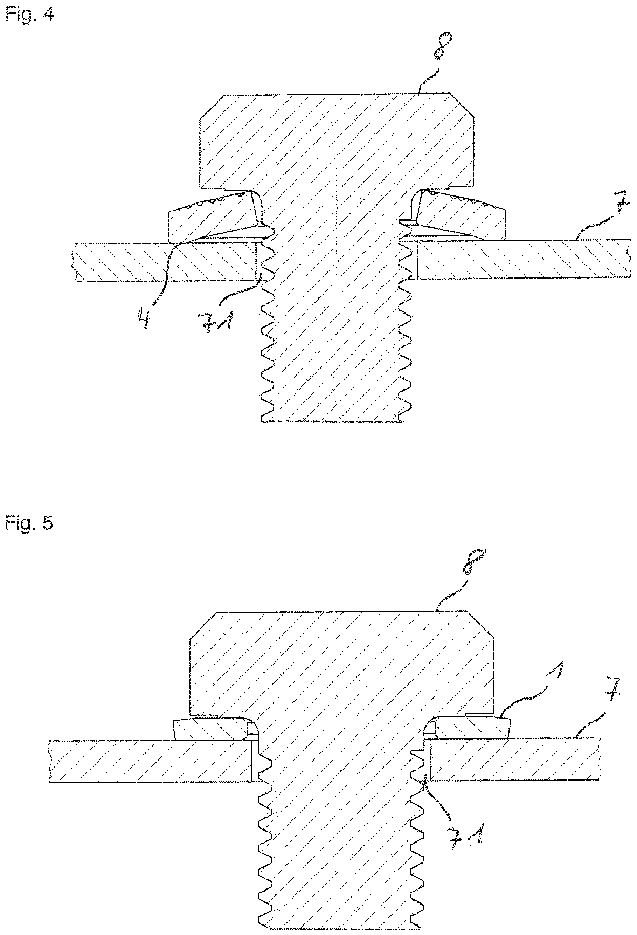

In Figur 4 ist die Anordnung einer erfindungsgemäßen Sicherungsscheibe zur Herstellung einer elektrisch leitenden Verbindung schematisch skizziert. Wobei lediglich die der Sicherungsscheibe als Anlage dienende Kontaktschiene 7 gezeigt ist. Hierbei ist eine Schraube 8 durch den Scheibenkörper 1 einer Sicherungsscheibe sowie eine Bohrung 71 einer Kontaktschiene 7 geführt. In Figur 7 ist die Schraube 8 nicht angezogen, d.h., die Sicherungsscheibe befindet sich im unverspannten Zustand. Hierbei liegt die Sicherungsscheibe flächig mit ihrer Gleitringfläche 4 auf der ebenen elektrischen Kontaktschiene 7 auf. Beim Anziehen der Schraube 8 wird der Scheibenkörper 1 in Richtung der Kontaktschiene 7 gepresst, wobei die Gleitringfläche 4 über das Drehmoment des an dieser anliegenden Schraubenkopfes rotiert sowie durch den Anpressdrucknach außen bewegt wird. Die Radien der Übergänge 43, 45 der Gleitringfläche 4 zu der äußeren Ringabschnittsfläche 3 sowie der Außenmantelfläche 5 sind so ausgelegt, dass die Gleitringfläche 4 in Art einer Kufe über die weiche, regelmäßig aus Kupfer oder Aluminium hergestellte Kontaktschiene 7 gleitet, welche deshalb nicht beschädigt wird. In Figur 5 ist die Sicherungsscheibe im verspannten Zustand dargestellt. Wie dort ersichtlich liegt die Sicherungsscheibe beim Erreichen des - gegenüber "auf normalen" zur Schraubenverbindung verminderten - Anziehdrehmoments komplett plan auf der elektrischen Kontaktschiene 7 auf, so dass der Stromfluss nicht behindert wird. Aufgrund der Wahl des Winkels der nach innen gewölbten Ringabschnittsflächen 2, 3 zueinander besteht über einen sehr langen Setzbereich einer optimale Kontaktfläche zur Kontaktschiene 7, verbunden mit der Gewährleistung der erforderlichen Vorspannkräfte.

## Patentansprüche

1. Sicherungsscheibe für elektrisch leitende Verbindungen zur Anordnung auf einer ebenen elektrischen Kontaktschiene (7), umfassend einen ringförmigen Scheibenkörper (1), an dessen der Kontaktschiene (7) zuwendbarer Scheibenunterseite (12) eine äußere Ringabschnittsfläche (3) und eine innere Ringabschnittsfläche (2) winklig zueinander angeordnet sind, wobei die äußere Ringabschnittsfläche (3) in eine ebene Gleitringfläche (4) übergeht, die zur flächigen Anlage an der Kontaktschiene (7) ausgebildet ist, **dadurch gekennzeichnet, dass** die äußere Ringabschnittsfläche (3) mit der inneren Ringabschnittsfläche (2) einen Winkel α von größer 160° und die äußere Ringabschnittsfläche (3) mit der Gleitringfläche (4) einen Winkel β von größer 165°einschließt, wobei die der Kontaktschiene (7) abgewandte Scheibenoberseite (11) eine Wölbung aufweist wobei die Wölbung konkav ausgebildet ist.

2. Sicherungsscheibe nach Anspruch 1, **dadurch gekennzeichnet, dass** die Gleitringfläche (4) mittels Prägen hergestellt ist.

3. Sicherungsscheibe nach Anspruch 1 oder 2, **dadurch gekennzeichnet, dass** der Übergang (43) der Gleitringfläche (4) zur äußeren Ringabschnittsfläche (3) abgerundet ausgebildet ist.

4. Sicherungsscheibe nach einem der vorgenannten Ansprüche, **dadurch gekennzeichnet, dass** der Übergang (45) der Gleitringfläche (4) zur Außenmantelfläche (5) des Scheibenkörpers (1) abgerundet ausgebildet ist.

5. Sicherungsscheibe nach einem der vorgenannten Ansprüche, **dadurch gekennzeichnet, dass** der Übergang (26) zwischen der inneren Ringabschnittsfläche (2) und der Innenmantelfläche (6) des Scheibenkörpers (1) abgerundet ausgebildet ist.

6. Sicherungsscheibe nach einem der Ansprüche 3 bis 5, **dadurch gekennzeichnet, dass** wenigstens einer der abgerundeten Übergänge (43, 45, 26) durch Prägen hergestellt ist.

7. Sicherungsscheibe nach einem der vorgenannten Ansprüche, **dadurch gekennzeichnet, dass** die äußere Ringabschnittsfläche (3) mit der inneren Ringabschnittsfläche (2) einen Winkel α von größer 165°, bevorzugt größer 170° einschließt.

8. Sicherungsscheibe nach einem der vorgenannten Ansprüche, **dadurch gekennzeichnet, dass** die äußere Ringabschnittsfläche (3) mit der Gleitringfläche (4) einen Winkel β von größer 170°, bevorzugt größer gleich 173° einschließt.

9. Scheibe nach einem der vorgenannten Ansprüche, **dadurch gekennzeichnet, dass** die äußere Ringabschnittsfläche (3) gewölbt ausgebildet ist.

10. Scheibe nach einem der vorgenannten Ansprüche, **dadurch gekennzeichnet, dass** die innere Ringabschnittsfläche (2) gewölbt ausgebildet ist.

11. Scheibe nach einem der vorgenannten Ansprüche, **dadurch gekennzeichnet, dass** die der Kontaktschiene (7) abgewandte Scheibenoberseite (11) eine Profilierung (13) aufweist.

12. Scheibe nach Anspruch 11, **dadurch gekennzeichnet, dass** die Profilierung (13) als V- oder S-Profilierung ausgebildet ist.

## Claims

1. Lock washer for electrically conductive connections for arrangement on a flat electrical contact rail (7) comprising an annular washer body (1), at whose washer underside (12), which can be turned towards the contact rail (7), an outer ring portion surface (3) and an inner ring portion surface (2) are arranged at an angle with respect to one another, wherein the outer ring portion surface (3) merges into a flat slip ring surface (4), which is designed for flat abutment against the contact rail (7), **characterised in that** the outer ring portion surface (3) forms an angle □ of greater than 160° with the inner ring portion surface (2) and the outer ring portion surface (3) forms an angle □ of greater than 165° with the slip ring surface (4), wherein the upper side of the washer (11) facing away from the contact rail (7) has a curvature, wherein the curvature is concave.

2. Lock washer according to claim 1, **characterised in that** the slip ring surface (4) is produced by embossing.

3. Lock washer according to claim 1 or 2, **characterised in that** the transition (43) from the slip ring surface (4) to the outer ring portion surface (3) is rounded.

4. Lock washer according to one of the previous claims, **characterised in that** the transition (45) from the slip ring surface (4) to the outer surface (5) of the washer body (1) is rounded.

5. Lock washer according to one of the previous claims, **characterised in that** the transition (26) between the inner ring portion surface (2) and the inner surface (6) of the washer body (1) is rounded.

6. Lock washer according to one of claims 3 to 5, **characterised in that** at least one of the rounded transitions (43, 45, 26) is produced by embossing.

7. Lock washer according to one of the previous claims, **characterised in that** the outer ring portion surface (3) forms an angle □ of greater than 165°, preferably greater than 170°, with the inner ring portion surface (2).

8. Lock washer according to one of the previous claims, **characterised in that** the outer ring portion surface (3) forms an angle □ of greater than 170°, preferably equal to or greater than 173°, with the slip ring surface (4).

9. Washer according to one of the previous claims, **characterised in that** the outer ring portion surface (3) is curved.

10. Washer according to one of the previous claims, **characterised in that** the inner ring portion surface (2) is curved.

11. Washer according to one of the previous claims, **characterised in that** the upper side of the washer (11) facing away from the contact rail (7) has a profiling (13).

12. Washer according to claim 11, **characterised in that** the profiling (13) is designed as a V-profiling or S-profiling.

## Revendications

1. Rondelle de sécurité pour liaisons électroconductrices à disposer sur une barre de contact électrique plane (7), comprenant un corps (1) de rondelle annulaire contre le côté inférieur (12) duquel pouvant être placé de sorte à regarder la barre de contact (7) sont disposées, formant réciproquement un angle, une surface extérieure (3) de segment annulaire et une surface intérieure (2) de segment annulaire, sachant que la surface extérieure (3) de segment annulaire devient une surface de glissement (4) annulaire plate configurée pour appliquer à plat contre la barre de contact (7), **caractérisée en ce que** la surface extérieure (3) de segment annulaire englobe, avec la surface intérieure (2) de segment annulaire, un angle á de plus de 160° et que la surface extérieure (3) de segment annulaire englobe, avec la surface de glissement (4) annulaire, un angle â de plus de 165°, sachant que le dessus (11) de la rondelle ne regardant pas la barre de contact (7) présente une incurvation, sachant que cette incurvation est configurée concave.

2. Rondelle de sécurité selon la revendication 1, **caractérisée en ce que** la surface de glissement (4) annulaire est fabriquée par gaufrage.

3. Rondelle de sécurité selon la revendication 1 ou 2, **caractérisée en ce que** la transition (43) entre la surface de glissement (4) annulaire et la surface extérieure (3) de segment annulaire est configurée arrondie.

4. Rondelle de sécurité selon l'une des revendications précédentes, **caractérisée en ce que** la transition (45) entre la surface de glissement (4) annulaire et la surface enveloppante (5) extérieure du corps (1) de rondelle est configurée arrondie.

5. Rondelle de sécurité selon l'une des revendications précédentes, **caractérisée en ce que** la transition (26) entre la surface intérieure (2) de segment annulaire et la surface enveloppante (6) intérieure du corps (1) de rondelle est configurée arrondie.

6. Rondelle de sécurité selon l'une des revendications 3 à 5, **caractérisée en ce qu'**au moins l'une des transitions arrondies (43, 45, 26) est fabriquée par gaufrage.

7. Rondelle de sécurité selon l'une des revendications précédentes, **caractérisée en ce que** la surface extérieure (3) de segment annulaire englobe, avec la surface intérieure (2) de segment annulaire, un angle á de plus de 165°, de préférence de plus de 170°.

8. Rondelle de sécurité selon l'une des revendications précédentes, **caractérisée en ce que** la surface extérieure (3) de segment annulaire englobe, avec la surface de glissement (4) annulaire, un angle â de plus de 170°, de préférence de plus de 173°.

9. Rondelle selon l'une des revendications précédentes, **caractérisée en ce que** la surface extérieure (3) de segment annulaire est configurée incurvée.

10. Rondelle selon l'une des revendications précédentes, **caractérisée en ce que** la surface intérieure (2) de segment annulaire est configurée incurvée.

11. Rondelle selon l'une des revendications précédentes, **caractérisée en ce que** le dessus (11) de la rondelle ne regardant pas la barre de contact (7) présente une géométrie profilée (13).

12. Rondelle selon la revendication 11, **caractérisée en ce que** la géométrie profilée (13) est configurée profilée en V ou en S.
